# EUROPEAN PATENT SPECIFICATION

(11) **EP 2 755 365 B1**
(45) Date of publication and mention of the grant of the patent: **25.07.2018**
(21) Application number: 14150299.7
(22) Date of filing: 07.01.2014
(51) Int. Cl.: H04L 29/06

(54) **CABLE MODEM AND METHOD OF SELECTING COMMUNICATION PROTOCOLS THEREOF**
KABELMODEM UND VERFAHREN ZUR AUSWAHL VON KOMMUNIKATIONSPROTOKOLLEN DAFÜR
MODEM DE CÂBLE ET PROCÉDÉ DE SÉLECTION DE PROTOCOLES DE COMMUNICATION ASSOCIÉS

(30) Priority: 09.01.2013 TW 102100720
(43) Date of publication of application: 16.07.2014
(73) Proprietor: Compal Broadband Networks Inc., 114 Taipei City (TW)
(72) Inventor: Cheng, Jen-Cheng, 30265 Hsinchu County (TW)
(74) Representative: Becker Kurig Straus

(56) References cited:
- WO-A2-02/096055
- US-A1- 2011 310 887

## Description

### Field of the Invention

The invention relates to a cable modem and a method of selecting voice over internet protocol (VoIP) communication protocols, and especially relates to a cable modem and a method of selecting VoIP communication protocols including a simple selection of the VoIP communication protocols and its easy management thereof.

### Background of the Invention

Many communication protocols are utilized in the current voice over internet protocol (VoIP), wherein a media gateway control protocol and a session initiation protocol are used widely as VoIP communication protocols. Since the two different VoIP communication protocols may be alternatively applied, before the VoIP connection is established, a VoIP communication protocol for deciding which of the two different VOIP communication protocols is necessarily operated first.

In a cable network, there are many different network structures, such as packet cable 1.X and packet cable 2.0. A cable modem supporting the packet cable 1.Xmay select the media gateway control protocol as the VoIP communication protocol of the cable modem, and a cable modem supporting the packet cable 2.0 may select the session initiation protocol as the VoIP communication protocol of the cable modem. Since a cable modem simultaneously supporting the packet cable 1.X and the packet cable 2.0 has been developed today, before the cable modem establishes the VoIP connection, a mechanism for selecting which VoIP communication protocol for operations of the cable modem is required.

A conventional cable modem is required to store medium access control (MAC) addresses of all media gateway control protocol servers and all session initiation protocol servers in a database . Before a VoIP connection is established, the conventional cable modem needs to analyze a configuration file from a trivial file transfer protocol server and to obtain a MAC address of a VoIP server through the configuration file. Then, the conventional cable modem determines the VoIP communication protocol to be used according to a result of comparing the MAC address of the VoIP server with the database. Therefore, the method used in a conventional cable modem requires an algorithm for searching the database which is time consuming.

Furthermore, since the database is established for storing the MAC addresses of all the media gateway control protocol servers and all the session initiation protocol servers, memories are not only wasted, but the management thereof is also quite complicated. For example, additional instructions are required for deleting or adding the server MAC address . Moreover, if a server MAC address in the database is incomplete, causing the corresponding server MAC address not to be found, a system failure may occur.

On the other hand, document WO 02/096055 A2 discloses a user agent, which has a multi-protocol call manager. The multi-protocol call manager allows translating a command from the session initiation protocol to the media gateway control protocol . Also, document US 20110310887 A1 discloses that a cable modem includes a default system and a backup system employing different packet cable protocols. Specifically, after the cable modem receives a configuration file from a TFTP server to obtain configuration configured by a service provider for the cable modem, the cable modem determines if the service provider configures a vendor specific information (VSIF) in the configuration file as 1 or 2. If the VSIF is configured as 1 by the service provider - meaning that the cable modem is required to work under session initiation protocol which corresponds to PC2. 0 - but the default system for booting employs PC1.0 or PC1.5, the cable modem determines if the backup system is available. If the backup system is unavailable, the cable modem can do nothing but boots with the default system; only when the VSIF mismatches with the default system and when the backup system is available does the cable modem switch the currently default system to the backup system and reboot with the original backup system.

However, the vendor specific information of document US 20110310887 A1 is not a necessary parameter required by the media gateway control protocol or the session initiation protocol. And the vendor specific information is in fact negligible, because document US 20110310887 A1 teaches that the cable modem, which required to work under session initiation protocol boots, would use the default system employing PC1.0 or PC1.5 (which corresponds to media gateway control protocol) when the backup system is unavailable. Moreover, the vendor specific information may be an integer unrelated to the media gateway control protocol and the session initiation protocol according to the teaching of document US 20110310887 A1. Needless to say, frequently comparing the VSIF and the specification of the current default system is time-wasting.

It is thus clear that the method with which the conventional cable modem selects the VoIP communication protocol increases complexity and may cause system failure. There is thus a need for improvement of the method.

### Summary of the Invention

The present invention aims at providing a cable modem and a method of selecting voice over internet protocol (VoIP) communication protocols including a simple selection of the VoIP communication protocols and its easy management thereof.

This is achieved by a cable modem and a communication protocol selecting method according to claims 1 and 6 respectively. The dependent claims pertain to corresponding further developments and improvements.

As will be seen more clearly from the detailed description herebelow, a claimed cable modem, supporting a media gateway control protocol and a session initiation protocol, and a cable modem comprising a communicating module, for communicating with a trivial file transfer protocol server to obtain a file comprising a plurality of voice over internet protocol (VoIP) related setting parameters; an analyzing module, for generating at least one analytic result according to the plurality of voice over internet protocol (VoIP) related setting parameters of the file; and a selecting module, for selecting the media gateway control protocol or the session initiation protocol as a voice over internet protocol (VoIP) communication protocol of the cable modem according to the at least one analytic result.

In another aspect, as will be seen more clearly from the detailed description following below, the claimed communication protocol selecting method for a cable modem, wherein the cable modem comprises a communicating module for communicating with a trivial file transfer protocol server, an analyzing module, and a selecting module, and the communication protocol selecting method comprising the communicating module obtaining a file comprising a plurality of voice over internet protocol (VoIP) related setting parameters from the trivial file transfer protocol server; the analyzing module generating at least one analytic result according to the plurality of voice over internet protocol (VoIP) related setting parameters of the file; and the selecting module selecting the media gateway control protocol or the session initiation protocol as a voice over internet protocol (VoIP) communication protocol of the cable modem according to the at least one analytic result.

### Brief Description of the Drawings

FIG. 1 is a schematic diagram of an operating environment according to an embodiment of the present invention.
FIG. 2 is a schematic diagram of a cable modem according to an embodiment of the present invention.
FIG. 3 is a schematic diagram of an operating process according to an embodiment of the present invention.

### Detailed Description

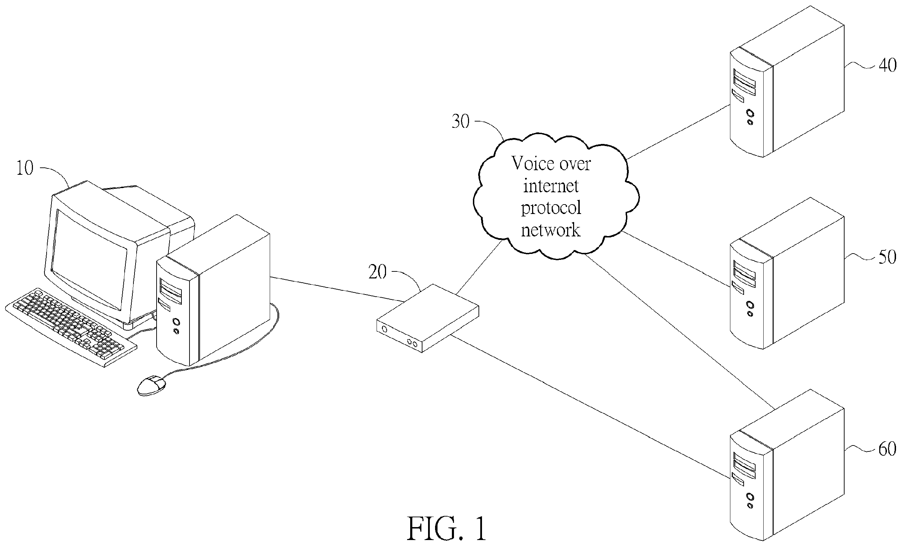

FIG. 1 illustrates a schematic diagram of a network environment according to an embodiment of the present invention. A terminal device 10 is connected to a voice over internet protocol (VoIP) network 30 through a cable modem 20, and the VoIP network 30 is connected to a media gateway control protocol server 40 and a session initiation protocol server 50. Additionally, the cable modem 20 and the VoIP network 30 are further connected to a trivial file transfer protocol server 60. In the network environment of FIG. 1, a media gateway control protocol and a session initiation protocol may be operated in the VoIP network 30, and parameters for operating the media gateway control protocol and the session initiation protocol are stored in the trivial file transfer protocol server 60.

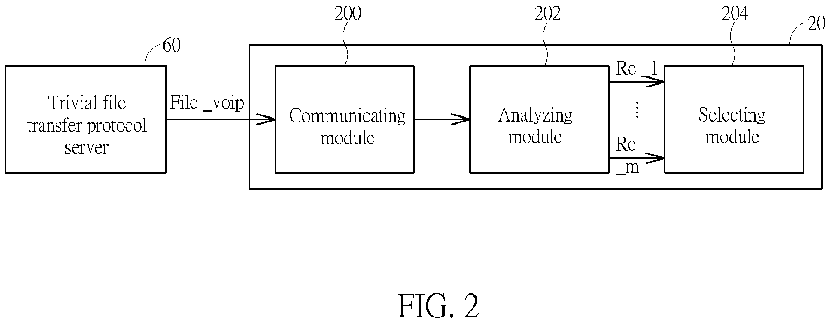

FIG. 2 illustrates a schematic diagram of functional blocks of the cable modem 20 in FIG. 1. The cable modem 20 supports the media gateway control protocol and the session initiation protocol, and the cable modem 20 includes a communicating module 200, an analyzing module 202, and a selecting module 204. The communicating module 200 is utilized for communicating with the trivial file transfer protocol server 60 to obtain a file File_VoIP comprising VoIP related setting parameters Pa_1-Pa_n, wherein n represents a positive integer. The related setting parameters Pa_1-Pa_n are the required parameters for establishing media gateway control protocol connections or session initiation protocol connections. Furthermore, at least one necessary parameter is included in the VoIP related setting parameters Pa_1-Pa_n, which accounts for the fact that the media gateway control protocol or the session initiation protocol require at least one necessary parameter to operate in any VoIP network.

The analyzing module 202 is utilized for analyzing the file File_VoIP to generate analytic results Re_1-Re_m according to the VoIP related setting parameters Pa_1-Pa_n of the file File_VoIP, wherein m represents a positive integer. The analyzing module 202 determines whether the necessary parameters of the media gateway control protocol or the session initiation protocol exists in the VoIP related setting parameters Pa_1-Pa_n of the file File_VoIP. For example, the analyzing module 202 determines whether a user identity, a user password, and other necessary parameters complying with the session initiation protocol exist in the VoIP related setting parameters Pa_1-Pa_n of the file File_VoIP to then generate the analytic results Re_1-Re_k (where k represents a positive integer and k<m). Additionally, the analyzing module 202 determines whether a fully qualified domain name of a call manager server and other necessary parameters complying with the media gateway control protocol exist in the VoIP related setting parameters Pa_1-Pa_n of the file File_VoIP to then generate the analytic results Re_k-Re_m. The selecting module 204 selects the session initiation protocol or the media gateway control protocol as a VoIP communication protocol of the cable modem 20 according to the analytic results Re_1-Re_m.

The cable modem 20 directly selects the session initiation protocol or the media gateway control protocol as the VoIP communication protocol according to the VoIP related setting parameters Pa_1-Pa_n of the file File_VoIP. In other words, the cable modem 20 is not required to compare a medium access control (MAC) address of a VoIP server with a database to determine the VoIP communication protocol to operate. Thus, a mechanism for selecting the communication protocol may be simplified, system failures caused by an incomplete server MAC address in the database may be decreased, and system complexity may be reduced.

The cable modem 20 in FIG. 2 is an embodiment of the present invention. Those skilled in the art can make modifications or alterations accordingly and not be limited herein. For example, according to different operating conditions, the analyzing module 202 may perform different analyses according to different VoIP related setting parameters, and is not limited to the necessary parameter of the media gateway control protocol or the session initiation protocol. Additionally, the necessary parameters determined by the analyzing module 202 are utilized as examples, and should not be interpreted as limiting the scope of the present invention. Those skilled in the art may modify the required necessary parameters of the analyzing module 202 according to the requirements of the different operating conditions to generate different analytic results.

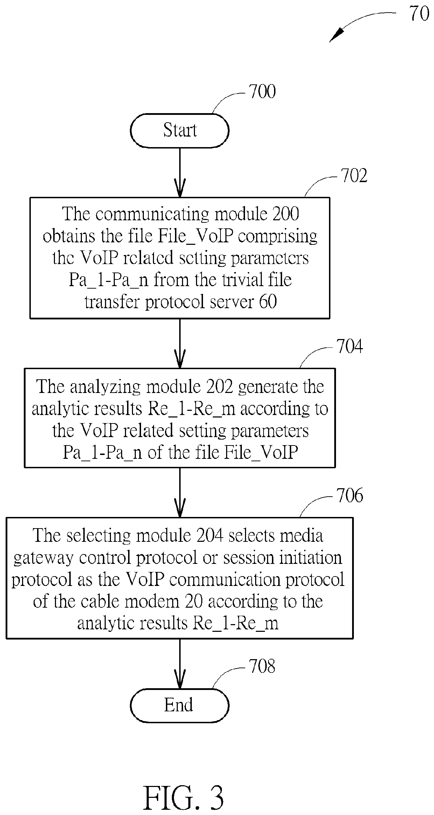

Operations of the cable modem 20 can be summarized in a process 70. As shown in FIG. 3, the process 70 includes the following steps:

| | |
|---|---|
| Step 700: | Start. |
| Step 702: | The communicating module 200 obtains the file File_VoIP comprising the VoIP related setting parameters Pa_1-Pa_n from the trivial file transfer protocol server 60. |
| Step 704: | The analyzing module 202 generate the analytic results Re_1-Re_m according to the VoIP related setting parameters Pa_1-Pa_n of the file File_VoIP. |
| Step 706: | The selecting module 204 selects media gateway control protocol or session initiation protocol as the VoIP communication protocol of the cable modem 20 according to the analytic results Re_1-Re_m. |
| Step 708: | End. |

As can be seen, the conventional cable modem is required to store the medium access control (MAC) addresses of all the media gateway control protocol servers and all the session initiation protocol servers in the database, and compares the MAC address of the VoIP server with the database to determine which VoIP communication protocol to operate. In comparison, the cable modem 20 of the present invention may directly analyze the file File_VoIP from the trivial file transfer protocol server 60 to select the VoIP communication protocol. Thus, the mechanism for selecting the communication protocol may be simplified, system failures caused by an incomplete server MAC address of the database may be decreased, and the system complexity may be reduced.

In summary, the cable modem 20 of the present invention may effectively simplify the mechanism for selecting the communication protocols and avoids system failures.

## Claims

1. A cable modem (20), supporting a media gateway control protocol and a session initiation protocol, the cable modem (20) comprising:
a communicating module (200), for communicating with a trivial file transfer protocol server (60) to obtain a file comprising a plurality of voice over internet protocol related setting parameters;
an analyzing module (202), for generating at least one analytic result according to whether any of the plurality of voice over internet protocol related setting parameters of the file is a necessary parameter required by the media gateway control protocol or the session initiation protocol; and
a selecting module (204), for selecting the media gateway control protocol or the session initiation protocol as a voice over internet protocol communication protocol of the cable modem (20) according to the at least one analytic result.

2. The cable modem (20) of claim 1, **characterized in that** the analyzing module (202) determines whether a user identity or a user password complying with the session initiation protocol exists in the plurality of voice over internet protocol related setting parameters to generate an analytic result of the at least one analytic result.

3. The cable modem (20) of claim 2, **characterized in that** when the analyzing module (202) determines the user identity or the user password complying with the session initiation protocol exists in the plurality of voice over internet protocol related setting parameters, the selecting module (204) selects the session initiation protocol as the voice over internet protocol communication protocol of the cable modem (20).

4. The cable modem (20) of claim 1, **characterized in that** the analyzing module (202) determines whether a fully qualified domain name of a call manager server complying with the media gateway control protocol exists in the plurality of voice over internet protocol related setting parameters to generate an analytic result of the at least one analytic result.

5. The cable modem (20) of claim 4, **characterized in that** when the analyzing module (202) determines the fully qualified domain name of the call manager server complying with the media gateway control protocol exists in the plurality of voice over internet protocol related setting parameters, the selecting module (204) selects the media gateway control protocol as the voice over internet protocol communication protocol of the cable modem (20).

6. A communication protocol selecting method (70) for a cable modem(20), wherein the cable modem (20) comprises a communicating module (200) for communicating with a trivial file transfer protocol server (60), an analyzing module (202) and a selecting module (204), and the communication protocol selecting method (70) is comprising the following steps of:
the communicating module obtaining a file comprising a plurality of voice over internet protocol related setting parameters from the trivial file transfer protocol server (702);
the analyzing module generating at least one analytic result according to whether any of the plurality of voice over internet protocol related setting parameters of the file (704) is a necessary parameter required by the media gateway control protocol or the session initiation protocol; and
the selecting module selecting the media gateway control protocol or the session initiation protocol as a voice over internet protocol communication protocol of the cable modem (20) according to the at least one analytic result (706).

7. The communication protocol selecting method (70) of claim 6, **characterized in that** the analyzing module (202) determines whether a user identity or a user password complying with the session initiation protocol exists in the plurality of voice over internet protocol related setting parameters to generate an analytic result of the at least one analytic result.

8. The communication protocol selecting method (70) of claim 7, **characterized in that** when the analyzing module (202) determines the user identity or the user password complying with the session initiation protocol exists in the plurality of voice over internet protocol related setting parameters, the selecting module (204) selects the session initiation protocol as the voice over internet protocol communication protocol of the cable modem (20).

9. The communication protocol selecting method (70) of claim 6, **characterized in that** the analyzing module (202) determines whether a fully qualified domain name of a call manager server complying with the media gateway control protocol exists in the plurality of voice over internet protocol related setting parameters to generate an analytic result of the at least one analytic result.

10. The communication protocol selecting method (70) of claim 9, **characterized in that** when the analyzing module (202) determines the fully qualified domain name of the call manager server complying with the media gateway control protocol exists in the plurality of voice over internet protocol related setting parameters, the selecting module (204) selects the media gateway control protocol as the voice over internet protocol communication protocol of the cable modem (20) .

## Patentansprüche

1. Kabelmodem (20), das ein Media-Gateway-Kontrollprotokoll und ein Sitzungs-Initiierungs-Protokoll unterstützt, worin das Kabelmodem (20) umfasst:
ein Kommunikationsmodul (200) zur Kommunikation mit einem Trivial-Datei-Transfer Protokoll-Server (60), um eine Datei mit mehreren Voice-Over-Internet-Protokoll assoziierten Einstellungs-Parametern zu erhalten;
ein Analyse-Modul (202), zur Erzeugung mindestens eines analytischen Ergebnisses gemäß ob jeder der mehreren Voice-Over-Internet-Protokoll assoziierten Einstellungs-Parameler der Datei ein notwendiger Parameter ist, der von dem Media-Gateway-Kontrollprotokoll oder dem Sitzungs-Initiierungs-Protokoll benötigt wird; und
ein Auswahlmodul (204) zur Auswahl des Media-Gateway-Kontrollprotokolls oder des Sitzungs-Initiierungs-Protokoll als ein Voice-Over-Internet-Protokoll-Kommunikationsprotokoll des Kabelmodems (20) gemäß dem mindestens einen analytischen Ergebnis.

2. Kabelmodem (20) nach Anspruch 1, **dadurch gekennzeichnet, dass** das Analyse-Modul (202) bestimmt, ob eine Nutzer-Identität oder ein Nutzer-Passwort, die/das mit dem Sitzungs-Initiierungs-Protokoll übereinstimmt, in den mehreren Voice-Over-Internet-Protokoll assoziierten Einstellungs-Parametern existiert, um ein Analyse-Ergebnis des mindestens einen analytischen Ergebnisses zu erzeugen.

3. Kabelmodem (20) nach Anspruch 2, **dadurch gekennzeichnet, dass** wenn das Analyse-Modul (202) bestimmt, dass eine Übereinstimmung der Nutzer-Identität oder des Nutzer-Passworts mit dem Sitzungs-Initiierungs-Protokoll in den mehreren Voice-Over-lnternet-Protokoll assoziierten Einstellungs-Parametern existiert, das Auswahlmodul (204) das Sitzungs-Initiierungs-Protokoll als das Voice-Over-Internet-Protokoll Kommunikationsprotokoll des Kabelmodems (20) auswählt.

4. Kabelmodem (20) nach Anspruch 1, **dadurch gekennzeichnet, dass** das Analyse-Modul (202) bestimmt, ob ein voll-qualifizierter Domain-Name eines Rufmanager-Servers, der mit dem Media-Gateway-Kontrollprotokoll übereinstimmt, in den mehreren Voice-Over Internet-Protokoll assoziierten Einstellungs-Parametern existiert, um ein analytisches Ergebnis des mindestens einen analytischen Ergebnisses zu erzeugen.

5. Kabelmodem (20) nach Anspruch 4, **dadurch gekennzeichnet, dass** wenn das Analyse-Modul (202) bestimmt, dass eine Übereinstimmung des voll qualifizierten Domain-Namens des Rufmanager-Servers mit dem Media-Gateway-Kontrollprotokoll in den mehreren Voice-Over Internet-Protokoll assoziierten Einstellungs-Parameter existiert, das Auswahlmodul (204)das Media-Gateway-Kontrollprotokoll als das Voice-Over-Internet-Protokoll Kommunikationsprotokoll des Kabelmodems (20) bestimmt.

6. Kommunikationsprotokoll-Auswahlverfahren (70) für ein Kabelmodem(20), worin das Kabelmodem (20) umfasst, ein Kommunikationsmodul (200) zur Kommunikation mit einem Trivial-Datei-Transfer Protokoll-Server (60), ein Analyse-Modul (202) und ein Auswahlmodul (204), und worin das Kommunikationsprotokoll-Auswahlverfahren (70) die folgenden Schritte umfasst:
das Kommunikationsmodul erhält eine Datei mit mehreren Voice-Over-Internet-Protokoll assoziierten Einstellungs-Parameter von dem Trivial Datei-Transfer Protokoll-Server (702);
das Analyse-Modul erzeugt mindestens ein analytisches Ergebnis gemäß ob die mehreren Voice-Over-Internet-Protokoll assoziierten Einstellungs-Parameter der Datei (704) ein notwendiger Parameter sind, die von dem Media-Gateway-Kontrollprotokoll oder dem Sitzungs-Initiierungs-Protokoll benötigt werden; und
das Auswahlmodul wählt das Media-Gateway-Kontrollprotokoll oder das Sitzungs-Initiierungs-Protolcoll als ein Voice-Over-Internet-Protokoll Kommunikationsprotokoll des Kabelmodems (20) gemäß dem mindestens einen analytischen Ergebnis (706).

7. Kommunikationsprotokoll-Auswahlverfahren (70) nach Anspruch 6, **dadurch gekennzeichnet, dass** das Analyse-Modul (202) bestimmt, ob eine Nutzer-Identität oder ein Nutzer-Password, die/das mit dem Sitzungs-Initiierungs-Protokoll übereinstimmt, in den mehreren Voice-Over-Internet-Protokoll assoziierten Einstellungs-Parametern existiert, um ein analytisches Ergebnis des mindestens einen analytischen Ergebnisses zu erzeugen.

8. Kommunikationsprotokoll-Auswahlverfahren (70) nach Anspruch 7, **dadurch gekennzeichnet, dass** wenn das Analyse-Modul (202) bestimmt, dass eine Übereinstimmung der Nutzer-Identität oder des Nutzer-Passworts mit dem Sitzungs-Initiierungs-Protokoll in den mehreren Voice-Over Internet-Protokoll assoziierten Einstellungs-Parametern existiert, das Auswahlmodul (204) das Sitzungs-Initiierungs-Protokoll als das Voice-Over Internet-Protokoll Kommunikationsprotokoll des Kabelmodems (20) bestimmt.

9. Kommunikationsprotokoll-Auswahlverfahren (70) nach Anspruch 6. **dadurch gekennzeichnet, dass** das Analyse-Modul (202) bestimmt, ob ein voll qualifizierter Domain-Name eines Ruf-Manager-Servers, der mit dem Media Gateway Kontrollprotokoll übereinstimmt, in den mehreren Voice-Over Internet-Protokoll assoziierten Einstellungs-Parametern existiert, um ein analytisches Ergebnis des mindestens einen analytischen Ergebnis zu erzeugen.

10. Kommunikationsprotokoll-Auswahlverfahren (70) nach Anspruch 9, **dadurch gekennzeichnet, dass** wenn das Analyse-Modul (202) bestimmt, dass eine Übereinstimmung des voll qualifizierten Domain-Namens des Ruf- Manager-Servers mit dem Media Gateway Kontrollprotokoll in den mehreren Voice-Over-Internet-Protokoll assoziierten Einstellungs-Parametern existiert, das Auswahlmodul (204) das Media-Gateway-Kontrollprotokoll als das Voice-Over-Internet-Protokoll Kommunikationsprotokoll des Kabelmodems (20) bestimmt.

## Revendications

1. Modem câble (20), prenant en charge un protocole de commande de passerelle média et un protocole d'ouverture de session, le modem câble (20) comprenant :
un module de communication (200), pour communiquer avec un serveur de protocole trivial de transfert de fichiers (60) pour obtenir un fichier comprenant une pluralité de paramètres de réglages relatifs à la voix sur le protocole Internet ;
un module d'analyse (202), pour générer au moins un résultat d'analyse en fonction de si l'un quelconque de la pluralité de paramètres de réglages relatifs à la voix sur le protocole Internet du fichier est un paramètre nécessaire requis par le protocole de commande de passerelle média ou le protocole d'ouverture de session ; et
un module de sélection (204), pour sélectionner le protocole de commande de passerelle média ou le protocole d'ouverture de session en tant que protocole de communication par voix sur le protocole Internet du modem câble (20) en fonction dudit au moins un résultat d'analyse.

2. Modem câble (20) selon la revendication 1, **caractérisé en ce que** le module d'analyse (202) détermine si une identité d'utilisateur ou un mot de passe d'utilisateur conforme au protocole d'ouverture de session existe dans la pluralité de paramètres de réglages relatifs à la voix sur le protocole Internet pour générer un résultat d'analyse dudit au moins un résultat d'analyse.

3. Modem câble (20) selon la revendication 2, **caractérisé en ce que** lorsque le module d'analyse (202) détermine que l'identité d'utilisateur ou le mot de passe d'utilisateur conforme au protocole d'ouverture de session existe dans la pluralité de paramètres de réglages relatifs à la voix sur le protocole Internet, le module de sélection (204) sélectionne le protocole d'ouverture de session en tant que protocole de communication par voix sur le protocole Internet du modem câble (20).

4. Modem câble (20) selon la revendication 1, **caractérisé en ce que** le module d'analyse (202) détermine si un nom de domaine complet d'un serveur gestionnaire d'appels conforme au protocole de commande de passerelle média existe dans la pluralité de paramètres de réglages relatifs à la voix sur le protocole Internet pour générer un résultat d'analyse dudit au moins un résultat d'analyse.

5. Modem câble (20) selon la revendication 4, **caractérisé en ce que** lorsque le module d'analyse (202) détermine que le nom de domaine complet du serveur gestionnaire d'appels conforme au protocole de commande de passerelle média existe dans la pluralité de paramètres de réglages relatifs à la voix sur le protocole Internet, le module de sélection (204) sélectionne le protocole de commande de passerelle média en tant que protocole de communication par voix sur le protocole Internet du modem câble (20).

6. Procédé de sélection de protocole de communication (70) pour un modem câble (20), le modem câble (20) comprenant un module de communication (200) pour communiquer avec un serveur de protocole trivial de transfert de fichiers (60), un module d'analyse (202) et un module de sélection (204), et le procédé de sélection de protocole de communication (70) comprenant les étapes suivantes :
le module de communication obtient un fichier comprenant une pluralité de paramètres de réglages relatifs à la voix sur le protocole Internet provenant du serveur de protocole trivial de transfert de fichiers (60) ;
le module d'analyse génère au moins un résultat d'analyse en fonction de si l'un quelconque de la pluralité de paramètres de réglages relatifs à la voix sur le protocole Internet du fichier (704) est un paramètre nécessaire requis par le protocole de commande de passerelle média ou le protocole d'ouverture de session ; et
le module de sélection sélectionne le protocole de commande de passerelle média ou le protocole d'ouverture de session en tant que protocole de communication par voix sur le protocole Internet du modem câble (20) en fonction dudit au moins un résultat d'analyse (706).

7. Procédé de sélection de protocole de communication (70) selon la revendication 6, **caractérisé en ce que** le module d'analyse (202) détermine si une identité d'utilisateur ou un mot de passe d'utilisateur conforme au protocole d'ouverture de session existe dans la pluralité de paramètres de réglages relatifs à la voix sur le protocole Internet pour générer un résultat d'analyse dudit au moins un résultat d'analyse.

8. Procédé de sélection de protocole de communication (70) selon la revendication 7, **caractérisé en ce que** lorsque le module d'analyse (202) détermine que l'identité d'utilisateur ou le mot de passe d'utilisateur conforme au protocole d'ouverture de session existe dans la pluralité de paramètres de réglages relatifs à la voix sur le protocole Internet, le module de sélection (204) sélectionne le protocole d'ouverture de session en tant que protocole de communication par voix sur le protocole Internet du modem câble (20).

9. Procédé de sélection de protocole de communication (70) selon la revendication 6, **caractérisé en ce que** le module d'analyse (202) détermine si un nom de domaine complet d'un serveur gestionnaire d'appels conforme au protocole de commande de passerelle média existe dans la pluralité de paramètres de réglages relatifs à la voix sur le protocole Internet pour générer un résultat d'analyse dudit au moins un résultat d'analyse.

10. Procédé de sélection de protocole de communication (70) selon la revendication 9, **caractérisé en ce que** lorsque le module d'analyse (202) détermine que le nom de domaine complet du serveur gestionnaire d'appels conforme au protocole de commande de passerelle média existe dans la pluralité de paramètres de réglages relatifs à la voix sur le protocole Internet, le module de sélection (204) sélectionne le protocole de commande de passerelle média en tant que protocole de communication par voix sur le protocole Internet du modem câble (20).
